# EUROPEAN PATENT APPLICATION

(11) **EP 4 141 648 A1**
(43) Date of publication of application: **01.03.2023**
(21) Application number: 21193486.4
(22) Date of filing: 27.08.2021
(51) Int. Cl.: G06F 8/10, G06F 8/35, G06F 8/36, G06N 20/00, G06N 5/00, G06N 3/08, G05B 17/00

(54) **METHOD AND SYSTEM FOR GENERATING AUTOMATION DOMAIN OBJECTS USING KNOWLEDGE FROM ANOTHER AUTOMATION DOMAIN OBJECT**

(71) Applicant: Siemens Aktiengesellschaft, 80333 München (DE)
(72) Inventor: CHENECHARRY, Vivek, 670662 Kannur, Kerala (IN); ANTONY, Elvis, 560102 Bangalore, Karnataka (IN)
(74) Representative: Isarpatent

(57) **Abstract**

The present invention provides a method and system for generating an automation domain object with a given specification from another automation domain object. The method comprises receiving a request to generate a first automation domain object (524) which has a first specification. The method further comprises generating a serialized intermediate representation (516) of a second automation domain object (504c). The serialized intermediate representation (516) comprises a description of a plurality of data items and a plurality of metadata items of the second automation domain object. The method further comprises generating the first automation domain object (524) which has the first specification, based on an analysis of an ontology schema (518) associated with the second automation domain object (504c) with the second specification.

## Description

The present invention relates to a field of computer assisted programming, and more particularly relates to a method and system for generating automation domain objects with a given specification from another automation domain object.

Typically, an industrial automation project comprises a plurality of automation domain objects. Each of the plurality of automation domain objects comprises information and source code associated with a specific aspect or a specific device of the industrial automation project. Examples of the plurality of automation domain objects comprises a design file, a program file, an openness file, an automation markup language (AML) file, a memory object, a description of a physical engineering equipment, and and a piping and instrumentation diagram of a technical installation.

Each of the plurality of automation domain objects may have a different specification of a plurality of specifications. A specification of an automation domain object defines a purpose of the automation domain object. The specification comprises coding languages, coding conventions, hardware configuration, software configurations, processing speed restrictions, memory restrictions, and key process indicators associated with the automation domain object.

In one example, a first automation domain object is a program file which is configured to control an industrial equipment, such as a motor. In such a case, a first specification of the first automation domain object defines that a purpose of the first automation domain object is to control the motor. In such a case, the first automation domain object may only be configured to control the motor and may not be configured to control any other industrial equipment, such as a hydraulic press. To control the hydraulic press, a object designer has to manually develop a second automation domain object, which may be another program file configured to control the hydraulic press.

In another example, the first automation domain object is a design file which comprises a design of the industrial equipment, such as the motor. In such a case, the first specification of the first automation domain object comprises a plurality of design details such as internal configuration, layout, shape, voltage rating, power rating and the like of the motor.

The object designer has to manually design each of the plurality of automation domain objects of the industrial automation project. Each of the plurality of automation domain objects may serve a different purpose in the industrial automation project. In order to develop the industrial automation project, the object designer may have to engineer hundreds of design features and write several thousand lines of code for each of the plurality of automation domain objects in the industrial automation project. Thus, it becomes very difficult and time consuming to generate the industrial automation project.

It is even more difficult to convert the first automation domain object with the first specification, to the second automation domain with a second specification. To convert the first automation domain object, a large number of design features and lines of program code of the first automation domain object, has to be manually modified by the object designer.

Further, each of the plurality of automation domain objects comprises a large number of data items and meta data items. The plurality of data items comprises code statements, data variables, variable assignment statements, design features, graphical interface layout, blueprints, configuration settings, looped statements comprised in the plurality of automation domain objects. The plurality of metadata items comprises date of creation, author name, domain of an industrial environment in which the industrial automation project is deployed. Each of the plurality of data items and the plurality of meta data items of a given automation domain object may have data and control flow interrelationships with other data items and meta data items of other automation domain objects. The object designer may have to strictly maintain interrelationships between the plurality of data items and the plurality of metadata items during a conversion of the first automation domain object to the second automation domain object. If the first automation domain object is converted to the second automation domain object without consideration of all of the available plurality of data items and the plurality of meta data items, the generated second automation domain object may be erroneous and faulty. An erroneously generated second automation domain object may create havoc in an industrial environment in which the second automation domain object is used. This may create situations which may be potentially hazardous to health of one or more workers in the industrial environment.

However, it is laboursome for the object designer to manually go through the huge number of data items and the huge number of metadata items, as well as identify the interrelationships between the plurality of data items and the plurality of meta data items in the first automation domain object.

In light of above, there exists a need for an efficient method and system for generating automation domain objects with a given specification from another automation domain object. Therefore, it is an object of the present invention to provide a method and system for generating automation domain objects with a given specification from another automation domain object.

The object of the invention is achieved by a method of generating an automation domain object with a given specification, from another automation domain object. The automation domain object comprises information and source code associated with a specific aspect of an industrial automation project. In one example, the automation domain object is a physical industrial equipment. Examples of the automation domain objects comprises a program file, an openness file, an automation markup language (AML) file, a memory object, a description of the physical engineering equipment, and piping and instrumentation diagram. The specification of the automation domain object comprises information associated with coding languages, coding conventions, hardware configuration, software configurations, processing speed restrictions, memory restrictions, and key process indicators associated with the automation domain object.

In a preferred embodiment, the method comprises receiving, by a processing unit, a request to generate a first automation domain object which has a first specification. The request is received from a user as at least one of a gesture based, text based, or voice based input via an input device such as a microphone, a camera or a keyboard. In one example, the first automation domain object is a representation of a first physical industrial equipment such as a direct current motor. In such a case, the first automation domain object comprises description of a plurality of parameter values, blueprints, internal components, and internal interconnections between various internal components of the first physical industrial equipment. The description comprises text-based descriptions, figures, and blueprints of the first physical industrial equipment. The plurality of parameter values comprises a speed, a voltage rating, a power rating, a communication protocol, and a power efficiency of the first physical industrial equipment.

In the preferred embodiment, the method comprises applying, by the processing unit, a natural language processing algorithm on a second automation domain object having a second specification. The second automation domain object has a second specification. In one example, the second automation domain object is a representation of a second physical industrial equipment such as an alternating current motor. In such a case, the second automation domain object comprises description of a plurality of parameter values, a blueprint, internal components, and internal interconnections between various internal components of the second physical industrial equipment. The description comprises text-based descriptions, figures, and blueprints of the second physical industrial equipment.

The method further comprises determining, by the processing unit, a plurality of data items and a plurality of meta data items associated with the second automation domain object based on the application of the natural language processing algorithm. Examples of the natural language processing algorithm includes but is not limited to Bayesian network algorithms and conditional random field algorithms. The plurality of data items comprises blueprints, descriptions about internal components of the second physical industrial equipment, code statements, data variables, variable assignment statements, looped statements comprised in the second automation domain object. The plurality of metadata items comprises date of creation, author name, domain of an industrial environment in which the second physical industrial equipment is deployed. Each of the plurality of data items and the plurality of meta data items of the second automation domain object may have data and control flow interrelationships with other data items and meta data items of other automation domain objects.

In the preferred embodiment, the method comprises serializing, by the processing unit, each of the determined plurality of data items and the plurality of meta data items associated with the second automation domain object. The method further comprises converting, by the processing unit, the serialized plurality of data items and metadata items into a serialized intermediate representation. In other words, the method comprises generating, by the processing unit, the serialized intermediate representation of the second automation domain object. The serialized intermediate representation comprises a description of the plurality of data items and the plurality of metadata items of the second automation domain object. The serialized intermediate representation is a Javascript Object Notation (JSON) based intermediate representation. The serialized intermediate representation of the second automation domain object comprises a JSON based description of each of the plurality of data items and the plurality of meta data items of the second automation domain object, and about the data and control flow interrelationships with other data items and meta data items of other automation domain objects. Advantageously, all information of the plurality of data items and the plurality of meta data items comprised in the second automation domain object is captured in the serialized intermediate representation losslessly.

In a preferred embodiment, the method further comprises generating, by the processing unit, an ontology schema comprising information associated with the interrelationships and dependencies between the plurality of data items and the plurality of metadata items of the second automation domain object. The ontology schema is generated based on an analysis of the serialized intermediate representation by the processing unit. The ontology schema is a digital twin of at least one of the second automation domain object and the second physical industrial equipment. In one example, the ontology schema is a knowledge graph based representation. The ontology schema is generated by an analysis of the serialized intermediate representation. Advantageously, the ontology schema is generated from the serialized intermediate representation which comprises description of each of the plurality of data items and the plurality of meta data items of the second automation domain object. Since all of the plurality of data items and the plurality of meta data items of the second automation domain object is captured losslessly in the serialized intermediate representation, the generated ontology schema is a faithful knowledge-based representation of the second automation domain object and of the second physical industrial equipment. Advantageously, all interelationships between the plurality of data items and the plurality of meta data items associated with the second automation domain object is captured by the processing unit automatically. Advantageously, a object designer is not required to manually extract and understand the plurality of data items and meta data items from the second automation domain object, prior to modifying the second automation domain object. Thus, amount of time and labour of the object designer, invested by the object designer to modify or correct the second automation domain object is diminished significantly.

In the preferred embodiment, the method further comprises determining, by the processing unit, a machine learning algorithm from a plurality of machine learning algorithms, based on an analysis of the first specification of the first automation domain object and the second specification of the second automation domain object. The machine learning algorithm is trained on a plurality of ontology schemas associated with a plurality of automation domain objects with a plurality of specifications. The machine learning algorithm is configured to convert the ontology schema of the second automation domain object with the second specifciation, into a modified ontology schema of the first automation domain object with the first specification. The modified ontology schema is a digital twin of the first automation domain object. In other words, the machine learning algorithm is configured to convert the digital twin of the second automation domain object with the second specification, into the digital twin of the first automation domain object with the first specification.

In the preferred embodiment, the method further comprises applying, by the processing unit, the determined machine learning algorithm on the ontology schema of the second automation domain object to generate the modified ontology schema associated with the first automation domain object. Advantageously, the modified ontology schema of the first automation domain object is generated from the ontology schema which is a faithful representation of the second automation domain object. Thus, advantageously, the modified ontology schema of the first automation domain object is error free and safe.

In other words, the method comprises modifying, by the processing unit, the ontology schema based on the application of the determined machine learning algorithm, such that the modified ontology schema comprises information associated with interrelationships and dependencies between a plurality of data items and a plurality of metadata items associated with the first automation domain object. The method further comprises generating, by the processing unit, a serialized intermediate representation of the modified ontology schema of the first automation domain object. The serialized intermediate representation comprises a description of the plurality of data items and the plurality of metadata items associated with the first automation domain object.

The method further comprises generating, by the processing unit, the first automation domain object which has the first specification, from the serialized intermediate representation of the plurality of data items and the plurality of metadata items of the first automation domain object. The first automation domain object is generated by implementing the plurality of data items and the plurality of metadata items in the serialized intermediate representation of the modified ontology schema. Advantageously, the first automation domain object with the first specification is automatically generated, thus reducing an amount of time and effort that must otherwise be spent by the object designer to manually code the first automation domain object. In one example, the first automation domain object is the direct current motor and the second automation domain object is the alternating current motor. In such a case, the processing unit is configured to generate the direct current motor from a serialized intermediate representation and a digital twin of the alternating current motor. Advantageously, the first physical industrial equipment is automatically designed from the second physical industrial equipment.

In the preferred embodiment, the method further comprises comparing, by the processing unit, the ontology schema associated with the second automation domain object with the modified ontology schema associated with the first automation domain object. The method further comprises determining, by the processing unit, one or more inconsistencies between the ontology schema and the modified ontology schema, based on the comparison. The determined one or more inconsistencies comprises design flaws and errors in the modified ontology schema of the first automation domain object.

The method further comprises generating, by the processing unit, a corrected ontology schema by modification of the ontology schema, such that, the determined one or more inconsistencies are absent in the corrected ontology schema. Advantageously, one or more design flaws in the modified ontology schema are automatically determined and eradicated by the method. Thus, time and effort that must be otherwise spent by the object designer to manually review the first automation domain object and identify design flaws, is eliminated. The method further comprises modifying, by the processing unit, the first automation domain object based on an analysis of the corrected ontology schema.

In the preferred embodiment, the method further comprises capturing, by the processing unit, a plurality of key process indicators associated with a technical installation, from a control system of the technical installation. The method further comprises capturing, by the processing unit, a plurality of run-time parameters of the first automation domain object. Examples of the plurality of the run-time parameters of the first automation domain object comprises efficiency, processing speed, memory requirement, and temperature. The method further comprises generating, by the processing unit, a knowledge graph comprising information about interdependencies between the plurality of key process indicators and the plurality of run-time parameters, based on an analysis of the captured plurality of key process indicators and the captured plurality of run-time parameters. The method further comprises determining, by the processing unit, a plurality of inconsistencies in the generated first automation domain object by comparison of the generated knowledge graph and the modified ontology schema associated with the generated first automation domain object.

In the preferred embodiment, the method further comprises predicting, by the processing unit, an occurrence of a variation in the plurality of key process indicators associated with the first automation domain object based on the analysis of the modified ontology schema. The variation is predicted to occur as a result of the modification of the ontology schema. The method further comprises modifying, by the processing unit, the first automation domain object, based on the prediction of the occurrence of the variation in the plurality of key process indicators, such that the variation is eradicated.

In the preferred embodiment, the method further comprises generating, by the processing unit, a simulation instance for an industrial environment. The method further comprises simulating, by the processing unit, deployment of the generated first automation domain object in the industrial environment by executing one or more functionalities of the first automation domain object on the generated simulation instance. The method further comprises determining, by the processing unit, whether the generated first automation domain object is valid, based on a result of the simulated execution of the generated first automation domain object. The method further comprises deploying, by the processing unit, the generated first automation domain object in real-time onto the industrial environment, based on a determination that the generated first automation domain object is valid. Advantageously, the generated first automation domain object is deployed in the industrial environment, after testing a validity of the generated first automation domain object. The method further comprises displaying, by the processing unit, the first automation domain object on a display device. Advantageously, the generated first automation domain object is displayed on the display device.

The object of the present invention is also achieved by an engineering system for generating an automation domain object with a given specification from another automation domain object. The engineering system comprises one or more processor(s) and a memory coupled to the processor. The memory comprises an automation module stored in the form of machine-readable instructions executable by the processor. The automation module is configured for performing the method as described above.

The object of the present invention is also achieved by an industrial environment. The industrial environment comprising an engineering system, a technical installation comprising one or more physical components and one or more client devices communicatively coupled to the engineering system and the technical installation. The engineering system is configured to perform the above described method steps.

The object of the present invention is also achieved by a computer-program product having machine-readable instructions stored therein, that when executed by one or more processor(s), cause the one or more processor(s) to perform method steps as described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a block diagram of an industrial environment capable of generating an automation domain object with a given specification from another automation domain object, according to an embodiment of the present invention;
- FIG 2: is a block diagram of an engineering system, such as those shown in FIG. 1, in which an embodiment of the present invention can be implemented;
- FIG 3: is a block diagram of an automation module, such as those shown in FIG 2, in which an embodiment of the present invention can be implemented;
- FIG 4A-E: is a process flowchart illustrating an exemplary method of generating an automation domain object with a specific specification from a given automation domain object, according to an embodiment of the present invention; and
- FIG 5A-F: is a exemplary illustration of a working of the engineering system, according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

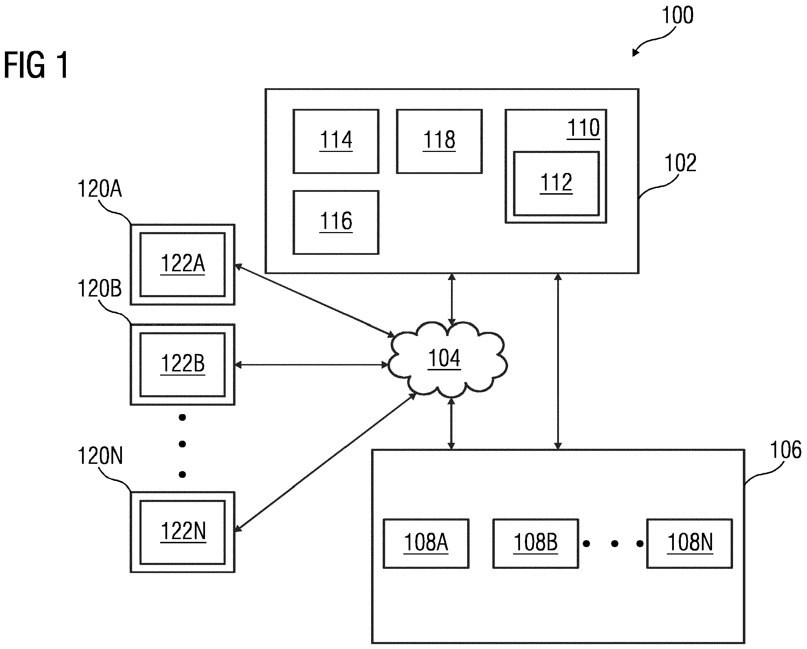

FIG 1 is a block diagram of an industrial environment 100 capable of generating an automation domain object with a given specification from another automation domain object, according to an embodiment of the present invention. In FIG 1, the industrial environment 100 includes an engineering system 102 controlled with an industrial automation project 106 and one or more client devices 120A-N. As used herein, "industrial environment" refers to a processing environment comprising configurable computing physical and logical resources, for example, networks, servers, storage, applications, services, etc., and data distributed over a platform, such as cloud computing platform. The industrial environment 100 provides on-demand network access to a shared pool of the configurable computing physical and logical resources. The engineering system 102 is communicatively connected to the industrial automation project 106 via the network 104 (such as Local Area Network (LAN), Wide Area Network (WAN), Wi-Fi, Internet, any short range or wide range communication). The engineering system 102 is also connected to the one or more client devices 120A-N via the network 104.

The engineering system 102 is controlled with the industrial automation project 106 which comprises one or more automation domain objects 108A-N. Each of the one or more automation domain objects 108A-N comprises design information and source code associated with a specific aspect or a specific device of an industrial automation project. Examples of the one or more automation domain objects 108A-N comprises a design file, a program logic controller block, a tag table, an alarm object, a plant automation object, a program file, an openness file, an automation markup language (AML) file, a memory object, a description of a physical engineering equipment, and and a piping and instrumentation diagram of a technical installation. Each of the one or more automation domain objects 108A-N may have a different specification of a plurality of specifications. A specification of an automation domain object defines a purpose of the automation domain object. The specification comprises coding languages, coding conventions, hardware configuration, software configurations, processing speed restrictions, memory restrictions, and key process indicators associated with the automation domain object. In one example, the one or more automation domain objects 108A-N comprises a program file which is configured to control an industrial equipment, such as a motor. In such a case, a first specification of the first automation domain object defines that a purpose of the first automation domain object is to control the motor. In such a case, the first automation domain object may only be configured to control the motor. In another example, the one or more automation domain objects 108A-N is a design file which comprises a design of the industrial equipment, such as the motor. In such a case, the first specification of the first automation domain object comprises a plurality of design details such as internal configuration, layout, shape, voltage rating, power rating and the like of the motor.

The one or more automation domain objects 108A-N may further include source code based representation of a plurality of devices such as servers, robots, switches, automation devices, programmable logic controllers (PLC)s, human machine interfaces (HMIs), motors, valves, pumps, actuators, sensors and other industrial equipment(s). The plurality of devices represented by the one or more automation domain objects 108A-N may be connected to each other or several other components (not shown in FIG 1) via physical connections. The physical connections may be through wiring between the plurality of devices. Alternatively, the plurality of devices may also be connected via non-physical connections (such as Internet of Things (IOT)) and 5G networks. Although, FIG 1 illustrates the engineering system 102 connected to one industrial automation project 106, one skilled in the art can envision that industrial automation project 106 may be stored in a memory storage device of the engineering system 102 or be stored in one or more servers located at different geographical locations.

The client devices 120A-N may be a desktop computer, laptop computer, tablet, smart phone and the like. Each of the client devices 120A-N is provided with an engineering tool 122AN for generating and/or editing a plurality of industrial automation projects respectively. The plurality of industrial automation projects comprises industrial automation projects which are designed for controlling a technical installation. Examples of the technical installation includes but is not limited to manufacturing plants, power plants, and recycling plants.

The client devices 120A-N can access the engineering system 102 for automatically generating industrial automation projects. The client devices 120A-N can access cloud applications (such as providing performance visualization of the one or more automation domain objects 108A-N via a web browser). Throughout the specification, the terms "client device" and "user device" are used interchangeably.

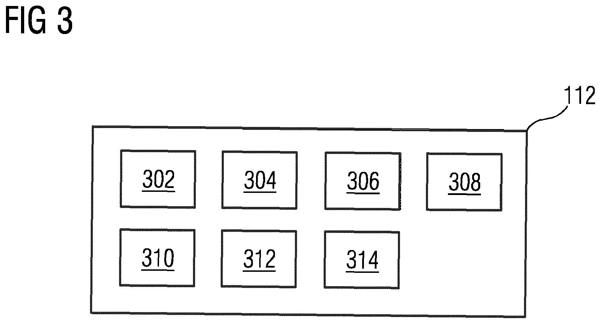

The engineering system 102 may be a standalone server deployed at a control station or may be a remote server on a cloud computing platform. In a preferred embodiment, the engineering system 102 may be a cloud-based engineering system. The engineering system 102 is capable of delivering applications (such as cloud applications) for managing a industrial automation project 106 comprising the one or more automation domain objects 108A-N. The engineering system 102 may comprise a platform 110(such as a cloud computing platform), an automation module 112, a server 114 including hardware resources and an operating system (OS), a network interface 116 and a database 118. The network interface 116 enables communication between the engineering system 102 and the client device(s) 120A-N. The interface (such as cloud interface)(not shown in FIG 1) may allow the engineers at the one or more client device(s) 120A-N to access a plurality of industrial automation project files stored at the engineering system 102 and perform one or more actions on the plurality of industrial automation project files as same instance. The server 114 may include one or more servers on which the OS is installed. The servers 114 may comprise one or more processors, one or more storage devices, such as, memory units, for storing data and machine-readable instructions for example, applications and application programming interfaces (APIs), and other peripherals required for providing computing (such as cloud computing) functionality. The platform 110 enables functionalities such as data reception, data processing, data rendering, data communication, etc. using the hardware resources and the OS of the servers 114 and delivers the aforementioned services using the application programming interfaces deployed therein. The platform 110 may comprise a combination of dedicated hardware and software built on top of the hardware and the OS. In an exemplary embodiment, the platform 110 may correspond to an Integrated Development Environment (IDE) comprising program editors and compilers which allow the users of the client devices 120A-N to generate engineering programs. The platform 110 may further comprise an automation module 112 configured for generating engineering programs. Details of the automation module 112 is explained in FIG. 3.

The database 118 stores the information relating to the industrial automation project 106 and the client device(s) 120A-N. The database 118 is, for example, a structured query language (SQL) data store or a not only SQL (NoSQL) data store. In an exemplary embodiment, the database 118 may be configured as cloud-based database implemented in the industrial environment 100, where computing resources are delivered as a service over the platform 110. The database 118, according to another embodiment of the present invention, is a location on a file system directly accessible by the automation module 112. The database 118 is configured to store industrial automation project files, engineering programs, object behavior model, parameter values associated with the one or more automation domain objects 108A-N, test results, simulation results, status messages, one or more simulation instances, graphical programs, program logics, program logic patterns, the one or more automation domain objects 108A-N and automation domain object properties, one or more automation domain object blocks, relationship information between the one or more automation domain objects 108A-N, requirements, program update messages and the like.

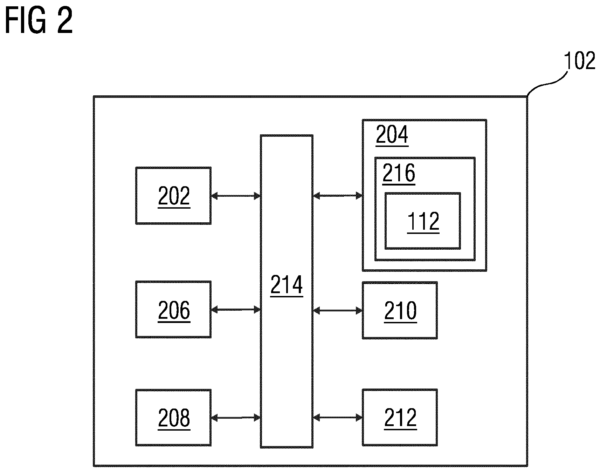

FIG 2 is a block diagram of an engineering system 102, such as those shown in FIG 1, in which an embodiment of the present invention can be implemented. In FIG 2, the engineering system 102 includes a processing unit 202, an accessible memory 204, a storage unit 206, a communication interface 208, an input-output unit 210, a network interface 212 and a bus 214.

The processing unit 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processing unit 202 may also include embedded controllers, such as generic or programmable logic devices or arrays, application specific integrated circuits, single-chip computers, and the like.

The memory 204 may be non-transitory volatile memory and nonvolatile memory. The memory 204 may be coupled for communication with the processing unit 202, such as being a computer-readable storage medium. The processing unit 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes an integrated development environment (IDE) 216. The IDE 216 includes an automation module 112 stored in the form of machine-readable instructions on any of the above-mentioned storage media and may be in communication with and executed by the processing unit 202. In one example, the industrial automation project 106 may be stored inside the memory 204.

When executed by the processing unit 202, the automation module 112 causes the processing unit 202 to generate automation domain objects which has a specific specification, from another automation domain object. In an embodiment, the automation module 112 causes the processing unit 202 to receive a request to generate a first automation domain object which has a first specification, from a second automation domain object with a second specification. In one example, the first automation domain object is a representation of a first physical industrial equipment such as a direct current motor. In such a case, the first automation domain object comprises description of a plurality of parameter values, a blueprint, internal components, and internal interconnections between various internal components of the first physical industrial equipment. The description comprises text-based descriptions, figures, and blueprints of the first physical industrial equipment. The plurality of parameter values comprises a speed, a voltage rating, a power rating, a communication protocol, and a power efficiency of the first physical industrial equipment.

The automation module 112 further causes the processing unit 202 to apply a natural language processing algorithm on a source code associated with a second automation domain object having a second specification. The second automation domain object has the second specification. The second automation domain object is one of the one or more automation domain objects 108A-N. In one example, the second automation domain object is a representation of a second physical industrial equipment such as an alternating current motor. In such a case, the second automation domain object comprises description of a plurality of parameter values, a blueprint, internal components, and internal interconnections between various internal components of the second physical industrial equipment. The description comprises text-based descriptions, figures, and blueprints of the second physical industrial equipment.

The automation module 112 further causes the processing unit 202 to determine a plurality of data items and a plurality of meta data items associated with the second automation domain object based on the application of the natural language processing algorithm. Examples of the natural language processing algorithm includes but is not limited to Bayesian network algorithms and conditional random field algorithms. The plurality of data items comprises code statements, data variables, variable assignment statements, looped statements comprised in the second automation domain object. The plurality of metadata items comprises date of creation, author name, domain of an industrial environment in which the second automation domain object is deployed. Each of the plurality of data items and the plurality of meta data items of the second automation domain object may have data and control flow interrelationships with other data items and meta data items of other automation domain objects of the one or more automation domain objects 108A-N. The plurality of data items and the plurality of meta data items of the second automation domain object are automatically determined by the processing unit 202. Advantageously, an object designer may not have to manually identify the plurality of data items and the plurality of meta data items from the second automation domain object.

The automation module 112 further causes the processing unit 202 to serialize each of the determined plurality of data items and the plurality of meta data items associated with the second automation domain object. The automation module 112 further causes the processing unit 202 to convert the serialized plurality of data items and metadata items into a serialized intermediate representation.

In other words, the automation module 112 further causes the processing unit 202 to generate the serialized intermediate representation of the second automation domain object. The serialized intermediate representation comprises a description of the plurality of data items and the plurality of metadata items of the second automation domain object. The serialized intermediate representation is a Javascript Object Notation (JSON) based intermediate representation. Each of the plurality of data items and the plurality of meta data items of the second automation domain object may have data and control flow interrelationships with other data items and meta data items of a plurality of other automation domain objects. Advantageously, all information of the plurality of data items and the plurality of meta data items comprised in the second automation domain object is captured in the serialized intermediate representation losslessly. In one example, the second automation domain object corresponds to the second physical industrial equipment. In such a case, the serialized intermediate representation comprises a JSON based representation of information about a plurality of design features, a plurality of blueprints, a plurality of internal components and interconnections, fitments of the plurality of internal components in the second physical industrial equipment. Advantageously, the generated serialized intermediate representation is a faithful representation of the second physical industrial equipment.

The automation module 112 further causes the processing unit 202 to generate an ontology schema comprising information associated with the interrelationships and dependencies between the plurality of data items and the plurality of metadata items of the second automation domain object. In one example, the ontology schema is a knowledge graph based representation. The ontology schema is a digital twin of at least one of the second automation domain object and the second physical industrial equipment. The ontology schema is generated by an analysis of the serialized intermediate representation. Advantageously, inter-relationships between the plurality of data items and the plurality of meta data items associated with the second automation domain object is extracted by the processing unit automatically. A object designer is not required to manually extract the plurality of data items and meta data items from the second automation domain object. Thus, amount of time and labour of the object designer, that should be invested by the object designer is diminished. The ontology schema is generated based on the serialized intermediate representation which is a faithful represenation of the second automation domain object. Thus, advantageously, the generated ontology schema is also a faithful and lossless representation of the second automation domain object.

In a preferred embodiment, the generated ontology schema comprises information about relationships between a set of variables and a set of Key process indicators associated with the to the second automation domain object. The set of variables comprises a plurality of data and pointer variables defined and used in the industrial automation project 106. The set of key process indicators associated with the second automation domain object are key process indicators achieved by the second automation domain object of the industrial automation project 106.

In one example, the ontology schema is a knowledge graph based representation comprising a plurality of layers. The plurality of layers comprises a first, a second, a third, and a fourth knowledge graph layer. The first knowledge graph layer comprises information associated with an interrelationship between the plurality of data items and the plurality of meta data items of the second automation domain object.

The second knowledge graph layer comprises information about interrelationships between a plurality of routines in one or more program blocks of the second automation domain object. The third knowledge graph layer comprises information about a plurality of data flow and a plurality of control flow paths between the the second automation domain object and the one or more automation domain objects 108A-N of the plurality of industrial automation projects. Further, the third knowledge graph layer comprises information about a mapping between two or more automation domain objects of the industrial automation project 106, based on a functionality of the two or more automation domain objects. For example, if a first automation domain object and a second automation domain object of the industrial automation project 106 perform a same functionality, then third knowledge graph layer comprises information which indicates that the first automation domain object is mapped to the second automation domain object. The fourth knowledge graph layer comprises information associated with the plurality of data flow paths and control flow paths between the plurality of code statements in the second automation domain object.

The automation module 112 further causes the processing unit 202 to determine a machine learning algorithm from a plurality of machine learning algorithms, based on an analysis of the first specification of the first automation domain object and the second specification of the second automation domain object. The determined machine learning algorithm is trained on a plurality of ontology schemas associated with a plurality of automation domain objects with a plurality of specifications. The determined machine learning algorithm is configured to convert the ontology schema of the second automation domain object with the second specification, into a modified ontology schema of the first automation domain object with the first specification. The modified ontology schema is a digital twin of the first automation domain object. In other words, the machine learning algorithm is configured to convert the digital twin of the second automation domain object with the second specification, into the digital twin of the first automation domain object with the first specification. The automation module 112 further causes the processing unit 202 to apply the determined machine learning algorithm on the ontology schema of the second automation domain object. The modified ontology schema comprises information about a plurality of data items and a plurality of metadata items associated with the first automation domain object. The plurality of data items and the plurality of metadata items of the first automation domain object are configured such that the first automation domain object is configured to have the first specification.

In other words, the automation module 112 further causes the processing unit 202 to modify the ontology schema based on the application of the determined machine learning algorithm, such that the modified ontology schema comprises information associated with interrelationships and dependencies between the plurality of data items and the plurality of metadata items associated with the first automation domain object.

The automation module 112 further causes the processing unit 202 to generate a serialized intermediate representation of the modified ontology schema of the first automation domain object. The serialized intermediate representation comprises a description of the plurality of data items and the plurality of metadata items associated with the first automation domain object. The method further comprises generating, by the processing unit, the first automation domain object which has the first specification, from the serialized intermediate representation of the plurality of data items and the plurality of metadata items of the first automation domain object. The first automation domain object is generated by implementing the plurality of data items and the plurality of metadata items in the serialized intermediate representation of the modified ontology schema. Advantageously, the first automation domain object with the first specification is automatically generated, thus reducing an amount of time and effort that must otherwise be spent by the object designer to manually design or code the first automation domain object.

In other words, the automation module 112 further causes the processing unit 202 to generate the first automation domain object which has the first specification, based on an analysis of the ontology schema associated with the second automation domain object with the second specification. Advantageously, teh automation module 112 causes the processing unit 202 to automatically generate code and design of the first automation domain object with the first specification, by learning from a design of the second automation domain object with the second specification. In one example, the first automation domain object is a representation of a direct current motor and the second automation domain object is a representation of an alternating current motor. In such a case, the automation module 112 causes the processing unit 202 to generate a design for the direct current motor from a serialized intermediate representation and a digital twin of the alternating current motor. Advantageously, the direct current motor is automatically designed from a knowledge representation of the alternating current motor.

The automation module 112 further causes the processing unit 202 to compare the ontology schema associated with the second automation domain object with the modified ontology schema associated with the first automation domain object. The method further comprises determining, by the processing unit, one or more consistencies between the ontology schema and the modified ontology schema, based on the comparison.

The automation module 112 further causes the processing unit 202 to generate a corrected ontology schema by modification of the ontology schema, such that, the determined one or more inconsistencies are absent in the corrected ontology schema. Advantageously, the one or more inconsistencies are automatically determined and eradicated by the method. Thus, time and effort that must be otherwise spent by the object designer to manually review the first automation domain object and identify inconsistencies, is eliminated.

The automation module 112 further causes the processing unit 202 to modify the first automation domain object based on an analysis of the corrected ontology schema. The automation module 112 further causes the processing unit 202 to capture a plurality of key process indicators associated with a technical installation, from a control system of the technical installation. The technical installation uses the generated first automation domain object. The plurality of key process indicators comprises a temperature value, a pressure value, a and a throughput value associated with the technical installation. The automation module 112 further causes the processing unit 202 to capture a plurality of run-time parameters of the first automation domain object. The plurality of the run-time parameters of the first automation domain object comprises efficiency, processing speed, memory requirement, and temperature.

The automation module 112 further causes the processing unit 202 to generate a knowledge graph comprising information about interdependencies between the plurality of key process indicators and the plurality of run-time parameters, based on an analysis of the captured plurality of key process indicators and the captured plurality of run-time parameters.

The automation module 112 further causes the processing unit 202 to determine a plurality of inconsistencies in the generated first automation domain object by comparison of the generated knowledge graph and the modified ontology schema associated with the generated first automation domain object.

The automation module 112 further causes the processing unit 202 to predict an occurrence of a variation in the plurality of key process indicators associated with the first automation domain object based on the analysis of the modified ontology schema. The variation is predicted to occur because of the modification of the ontology schema.

The automation module 112 further causes the processing unit 202 to modify the first automation domain object, based on the prediction of the occurrence of the variation in the plurality of key process indicators, such that the variation is eradicated.

The automation module 112 further causes the processing unit 202 to generate a simulation instance for the industrial environment 100. The automation module 112 further causes the processing unit 202 to simulate deployment of the generated first automation domain object in the industrial environment 100 by executing one or more functionalities of the first automation domain object on the generated simulation instance.

The automation module 112 further causes the processing unit 202 to determine whether the generated first automation domain object is valid, based on a result of the simulated execution of the generated first automation domain object.

The automation module 112 further causes the processing unit 202 to deploy the generated first automation domain object in real-time onto the industrial environment 100, based on a determination that the generated first automation domain object is valid. Advantageously, the generated first automation domain object is deployed in the industrial environment, after testing a validity of the generated first automation domain object. The automation module 112 further causes the processing unit 202 to display the first automation domain object on a display device such as the one or more client devices 120A-N. Advantageously, the generated first automation domain object is displayed on the display device.

The storage unit 206 may be a non-transitory storage medium configured for storing a database (such as database 118) which comprises server version of the one or more automation domain object 108A-N associated with the industrial automation project 106.

The communication interface 208 is configured for establishing communication sessions between the one or more client devices 120A-N and the engineering system 102. The communication interface 208 allows the one or more engineering applications running on the client devices 120A-N to import/export industrial automation project files into the engineering system 102. In an embodiment, the communication interface 208 interacts with the interface at the one or more client devices 120A-N for allowing the engineers to access the engineering programs associated with an industrial automation project file and perform one or more actions on the engineering programs stored in the engineering system 102.

The input-output unit 210 may include input devices a keypad, touch-sensitive display, camera (such as a camera receiving gesture-based inputs), etc. capable of receiving one or more input signals, such as user commands to process industrial automation project file. Also, the input-output unit 210 may be a display unit for displaying a graphical user interface which visualizes the behavior model associated with the modified engineering programs and also displays the status information associated with each set of actions performed on the graphical user interface. The set of actions may include execution of predefined tests, download, compile and deploy of graphical programs. The bus 214 acts as interconnect between the processing unit 202, the memory 204, and the input-output unit 210.

The network interface 212 may be configured to handle network connectivity, bandwidth and network traffic between the engineering system 102, client devices 120A-N and the industrial automation project 106.

Those of ordinary skilled in the art will appreciate that the hardware depicted in FIG 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of an engineering system 102 as is unique to the present disclosure or necessary for an understanding of the present disclosure is depicted and described. The remainder of the construction and operation of the engineering system 102 may conform to any of the various current implementation and practices known in the art.

FIG 3 is a block diagram of an automation module 112, such as those shown in FIG 2, in which an embodiment of the present invention can be implemented. In FIG 3, the automation module 112 comprises a request handler module 302, an object consistency checker module 304, an analysis module 306, a modifier module 308,an industrial automation project database 310, a validation module 312 and a deployment module 314. FIG. 3 is explained in conjunction with FIG. 1 and FIG. 2.

The request handler module 302 is configured for receiving the request to convert the first automation domain object to the second automation domain object of the industrial automation project 106. For example, the request is received from one of the one or more users external to the industrial environment 100 via a network. In alternative embodiment, the request is received from the one or the one or more client devices 120A-N via the network.

The object consistency checker module 304 is configured for determining a plurality of inconsistencies in the generated first automation domain object.

Further, the object consistency checker module 304 is configured for determining one or more automation domain object properties associated with each of the one or more automation domain objects 108A-N. The object properties are object's domain context, association and relationship with other automation domain objects, object size, object identifier, type of automation domain object, and the like. Such object properties are determined for each of the one or more automation domain objects. Such determination using ontology enables automation domain object elicitation & generalization, defines property & relationship between the automation domain objects.

When once the object properties are determined, the object consistency checker module 304 is configured for determining the plurality of inconsistencies in each of the one or more classified automation domain objects 108A-N and the plurality of logical blocks based on the determined relationships between each of the one or more automation domain objects 108AN. The object consistency checker module 304 is further configured for generating object behavior models of each of the one or more automation domain objects 108A-N.

In an embodiment, the object consistency checker module 304 is also configured for managing the one or more automation domain objects 108A-N, physical connections between the plurality of devices represented by the one or more automation domain objects 108A-N, and a plurality of parameter values associated with the one or more automation domain objects 108A-N and the physical connections. In one example, each of the one or more automation domain objects 108A-N comprises a set of programmable instructions or code statements corresponding to a program logic of each of the plurality of industrial automation projects. Each of the one or more automation domain objects 108A-N may correspond to a function block under an engineering design. The engineering design may comprise several such function blocks. The users at the client devices 120A-N uses the engineering tool 122A-N in order to design or develop the plurality of industrial automation projects.

The analysis module 306 is configured for analyzing the ontology schema associated with the one or more automation domain objects 108A-N. Specifically, the analysis module 306 is configured for retrieving data and control parameters associated with each of the one or more automation domain objects 108A-N. The data and control parameters are key process indicators comprising information relating to the set of programming blocks associated with the industrial domain of the industrial automation project 106, for example, sensor data, actuator data, environment data, network data, any automation data and the like. Further, the analysis module 306 is configured for comparing the retrieved data and control parameters associated with the set of programming blocks with data and control parameters stored in the object behavior model of the one or more automation domain objects 108A-N. Furthermore, the analysis module 306 is configured for identifying deviation between the retrieved data and control parameters associated with the set of programming blocks and the data and control parameters stored in the object behavior model of the one or more automation domain objects 108A-N. The deviation indicates a difference between the retrieved data and control parameters, and the data and control parameters stored in the object behavior model. Also, the analysis module 306 is configured for determining type of behavior of the one or more automation domain objects 108A-N corresponding to the identified deviation. The type of behavior comprises normal, abnormal, steady, and require maintenance and the like. Furthermore, the analysis module 306 is configured for analyzing the behavior of the one or more automation domain objects 108A-N based on the determined type of behavior. In one example, the analysis module 306 is configured to analyze the plurality of programming blocks by application of a natural language processing algorithm on a source code of the plurality of programming blocks.

The modifier module 308 is configured for modifying the one or more automation domain objects 108A-N based on the outcome of analysis of the ontology schema. The plurality of logical blocks is modified based on the analysis of the ontology schema. The modifications comprise any changes such as addition, deletion, update, replacement or revision of one or more variables, code lines, classes, functions, or comments in the one or more automation domain objects 108A-N. In one example, an outcome of analysis of the ontology schema may be a behavior report indicating whether behavior or characteristic of each logical block of the plurality of logical blocks as defined in the ontology schema is acceptable, improvised, enhanced, optimized or the like. Thus, the plurality of logical blocks are modified based on the relationships between the set of variables corresponding to each logical block in the plurality of logical blocks, the set of Key process indicators associated with the plurality of logical blocks, and an industrial domain of the industrial automation project 106. Thus, the plurality of industrial automation projects is generated based on the relationships between the set of variables corresponding to each logical block in the one or more automation domain objects 108A-N, the set of Key process indicators associated with the one or more automation domain objects 108A-N, and the industrial domain of the industrial automation project 106.

The industrial automation project database 310 is configured for storing an industrial automation project library comprising the plurality of industrial automation projects, the plurality of logical blocks, and the generated ontology schema. The industrial automation project database 310 is furtehr configured to store information about the one or more automation domain objects 108A-N, such as physical connections between the one or more automation domain objects 108A-N, and a plurality of parameter values associated with the one or more automation domain objects 108A-N and the physical connections. The industrial automation project database 310 is configured for continuously updating the industrial automation project library with updated versions of the industrial automation projects. Also, the industrial automation project database 310 is configured for maintaining the industrial automation project library in the generated ontology schema.

The validation module 312 is configured to generate a simulation instance for the industrial environment 100. In one example, the simulation instance is a digital twin of the one or more automation domain objects 108A-N which are functioning in the industrial environment 100. The validation module 312 is configured to simulate execution of the generated first automation domain object in the industrial environment 100 in a simulation environment by executing the generated first automation domain object on the generated simulation instance.

The deployment module 314 is configured for deploying the first automation domain object with the first specification in real-time onto the industrial environment 100 based on the validation. Advantageously, the generated first automation domain object is only deployed after the determination that the first automation domain object is valid.

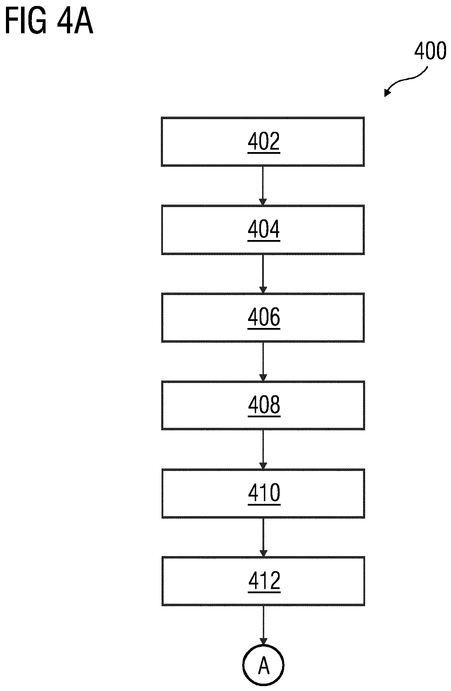

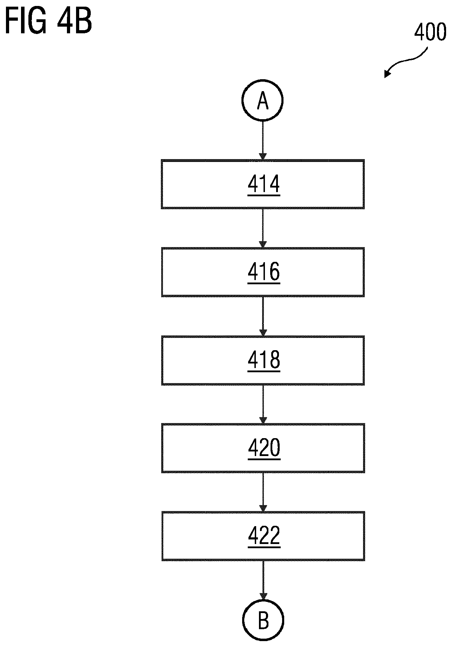

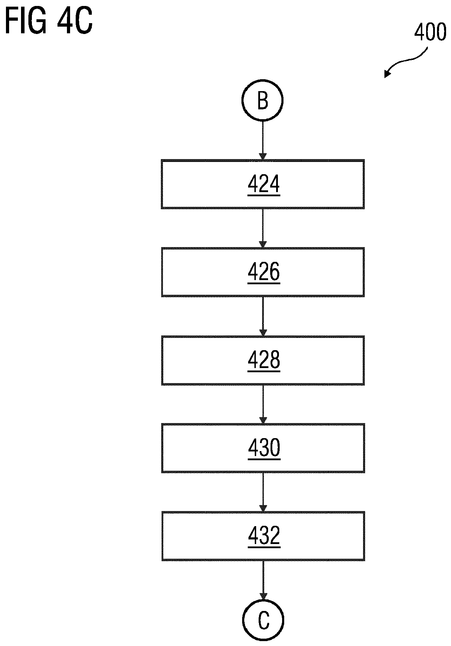

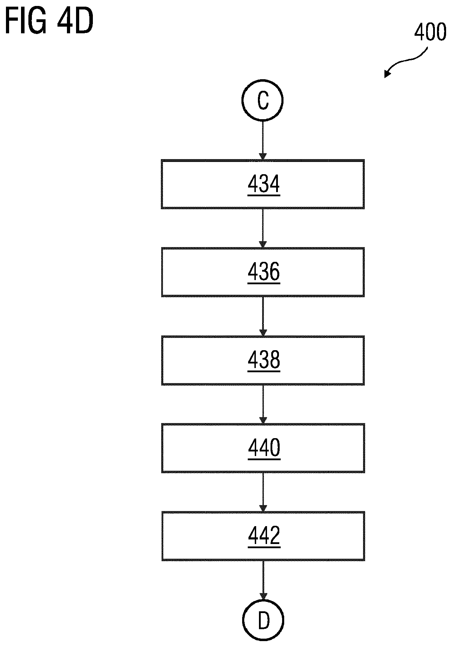

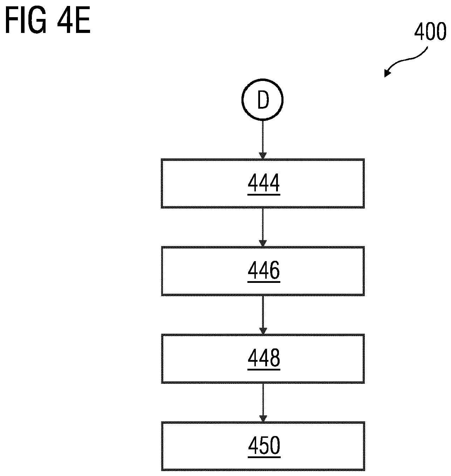

FIG 4A-E is a process flowchart illustrating an exemplary method 400 of generating automation domain object with a specific specification from another automation domain object in an engineering system 102, according to an embodiment of the present invention.

At step 402, a request to generate a first automation domain object which has a first specification, from a second automation domain object with a second specification, is received by the processing unit 202.

In one example, the first automation domain object and the second automation domain object are at least one of a design file, a program file, an openness file, an automation markup language (AML) file, a memory object, a description of a physical engineering equipment, and and a piping and instrumentation diagram of a technical installation.

In another example, the first automation domain object may be a representation of a first physical industrial equipment such as a direct current motor. In such a case, the first automation domain object comprises description of a plurality of parameter values, a blueprint, internal components, and internal interconnections between various internal components of the first physical industrial equipment. The description comprises text-based descriptions, figures, and blueprints of the first physical industrial equipment. The plurality of parameter values comprises a speed, a voltage rating, a power rating, a communication protocol, and a power efficiency of the first physical industrial equipment. Further, the second automation domain object may be a representation of a second physical industrial equipment such as an alternating current motor. In such a case, the second automation domain object comprises description of a plurality of parameter values, a blueprint, internal components, and internal interconnections between various internal components of the second physical industrial equipment. The description comprises text-based descriptions, figures, and blueprints of the second physical industrial equipment. The first automation domain object is the direct current motor and the second automation domain object is the alternating current motor. In such a case, the processing unit is configured to generate the direct current motor from a serialized intermediate representation and a digital twin of the alternating current motor. Advantageously, a design and code for the first physical industrial equipment is automatically generated from a knowledge representation of the second physical industrial equipment.

At step 404, a natural language processing algorithm is applied by the processing unit 202 on the second automation domain object having the second specification.

At step 406, a plurality of data items and a plurality of metadata items associated with the second automation domain object are determined by the processing unit 202 based on the application of the natural language processing algorithm. Examples of the natural language processing algorithm includes but is not limited to Bayesian network algorithms and conditional random field algorithms. The plurality of data items comprises descriptions about design features, code statements, data variables, variable assignment statements, looped statements comprised in the second automation domain object. The plurality of metadata items comprises date of creation, author name, domain of the industrial environment 100 in which the second automation domain object is deployed. Each of the plurality of data items and the plurality of meta data items of the second automation domain object may have data and control flow interrelationships with other data items and meta data items of other automation domain objects. Advantageously, all of the plurality of data items and the plurality of meta data items of the second automation domain objects are determined by the processing unit.

At step 408, each of the determined plurality of data items and the plurality of meta data items associated with the second automation domain object are serialized by the processing unit 202.

At step 410, the serialized plurality of data items and metadata items is converted by the processing unit 202 into a serialized intermediate representation. In other words, the automation module 112 further causes the processing unit 202 to generate the serialized intermediate representation of the second automation domain object. The serialized intermediate representation comprises a description of the plurality of data items and the plurality of metadata items of the second automation domain object. The serialized intermediate representation is a Javascript Object Notation (JSON) based intermediate representation. Each of the plurality of data items and the plurality of meta data items of the second automation domain object may have data and control flow interrelationships with other data items and meta data items of a plurality of other automation domain objects. Advantageously, all of the plurality of data items and the plurality of meta data items associated with the second automation domain object is preserved losslessly. The serialized intermediate representation of the second automation domain object comprises a JSON based description of each of the plurality of data items and the plurality of meta data items of the second automation domain object, and about the data and control flow interrelationships with other data items and meta data items of other automation domain objects.

At 412, an ontology schema comprising information associated with the interrelationships and dependencies between the plurality of data items and the plurality of metadata items of the second automation domain object is generated by the processing unit 202. In one example, the ontology schema is a knowledge graph based representation. The ontology schema is generated by an analysis of the serialized intermediate representation. Advantageously, the ontology schema is generated based on all of the plurality of data items and the plurality of meta data items associated with the second automation domain object losslessly. Advantageously, inter-relationships between the plurality of data items and the plurality of meta data items associated with the second automation domain object is extracted by the processing unit automatically. An object designer is not required to manually extract the plurality of data items and meta data items from the second automation domain object. Thus, amount of time and labour of the object designer, that should be invested by the object designer is diminished. In one example, the ontology schema is a digital twin of at least one of the second automation domain object and the second physical industrial equipment. Since all of the plurality of data items and the plurality of meta data items of the second automation domain object is captured losslessly in the serialized intermediate representation, the generated ontology schema is a faithful knowledge representation of the second automation domain object and of the second physical industrial equipment.

At step 414, a machine learning algorithm is determined by the processing unit 202, from a plurality of machine learning algorithms, based on an analysis of the first specification of the first automation domain object and the second specification of the second automation domain object. The machine learning algorithm is trained on a plurality of ontology schemas associated with a plurality of automation domain objects with a plurality of specifications. The determined machine learning algorithm is configured to convert the ontology schema of the second automation domain object with the second specification, into the modified ontology schema of the first automation domain object with the first specification. The machine learning algorithm is trained to be configured to modify one or more of the plurality of data items and the plurality of meta data items to modify the ontology schema associated with the second automation domain object, to the modified ontology schema associated with the first automation domain object. The modified ontology schema is a digital twin of the first automation domain object. In other words, the machine learning algorithm is configured to convert the digital twin of the second automation domain object with the second specification, into the digital twin of the first automation domain object with the first specification.

At step 416, the determined machine learning algorithm is applied by the processing unit 202, on the ontology schema of the second automation domain object. The modified ontology schema comprises information about a plurality of data items and a plurality of metadata items associated with the first automation domain object. The plurality of data items and the plurality of metadata items of the first automation domain object are configured such that the first automation domain object is configured to have the first specification. In other words, the automation module 112 further causes the processing unit 202 to modify the ontology schema based on the application of the determined machine learning algorithm, such that the modified ontology schema comprises information associated with interrelationships and dependencies between the plurality of data items and the plurality of metadata items associated with the first automation domain object.

At step 418, a serialized intermediate representation of the modified ontology schema of the first automation domain object is generated by the processing unit 202. The serialized intermediate representation comprises a description of the plurality of data items and the plurality of metadata items associated with the first automation domain object.

At step 420, the first automation domain object which has the first specification, is generated by the processing unit 202 from the serialized intermediate representation of the plurality of data items and the plurality of metadata items of the first automation domain object. The first automation domain object is generated by implementing the plurality of data items and the plurality of metadata items in the serialized intermediate representation of the modified ontology schema.

In other words, the automation module 112 further causes the processing unit 202 to generate the first automation domain object which has the first specification, based on an analysis of the ontology schema associated with the second automation domain object with the second specification.

At step 422, the ontology schema associated with the second automation domain object is compared by the processing unit 202 with the modified ontology schema associated with the first automation domain object.

At step 424, one or more inconsistencies between the ontology schema and the modified ontology schema is determined by the processing unit 202 based on the comparison.

At 426, a corrected ontology schema is generated by the processing unit by modification of the ontology schema, such that, the determined one or more inconsistencies are absent in the corrected ontology schema. Advantageously, the one or more inconsistencies are automatically determined and eradicated by the method. Thus, time and effort that must be otherwise spent by the object designer to manually review the first automation domain object and identify inconsistencies, is eliminated.

At step 428, the first automation domain object is modified by the processing unit 202 based on an analysis of the corrected ontology schema.

At step 430, a plurality of key process indicators associated with a technical installation are captured by the processing unit 202, from a control system of the technical installation.

At step 434, a plurality of run-time parameters of the first automation domain object are captured by the processing unit 202. The plurality of the run-time parameters of the first automation domain object comprises efficiency, processing speed, memory requirement, and temperature.

At step 436, a knowledge graph comprising information about interdependencies between the plurality of key process indicators and the plurality of run-time parameters is generated by the processing unit 202 based on an analysis of the captured plurality of key process indicators and the captured plurality of run-time parameters.

At step 438, a plurality of inconsistencies in the generated first automation domain object is determined by the processing unit 202 by comparison of the generated knowledge graph and the modified ontology schema associated with the generated first automation domain object.

At step 440, an occurrence of a variation in the plurality of key process indicators associated with the first automation domain object is predicted by the processing unit 202 based on the analysis of the modified ontology schema. The variation is predicted to occur as a result of the modification of the ontology schema.

At step 442, the first automation domain object is modified by the processing unit 202 based on the prediction of the occurrence of the variation in the plurality of key process indicators, such that the variation is eradicated.

At step 444, a simulation instance for an industrial environment is generated by the processing unit 202.

At step 446, deployment of the generated first automation domain object in the industrial environment is simulated by the processing unit 202 by executing one or more functionalities of the first automation domain object on the generated simulation instance.

At step 448, it is determined by the processing unit, whether the generated first automation domain object is valid, based on a result of the simulated execution of the generated first automation domain object.

At step 450, the generated first automation domain object is deployed by the processing unit 202 in real-time onto the industrial environment, based on a determination that the generated first automation domain object is valid. Advantageously, the generated first automation domain object is deployed in the industrial environment, after testing a validity of the generated first automation domain object. The processing unit 202 is further configured to display the first automation domain object on a display device. Advantageously, the generated first automation domain object is displayed on the display device.

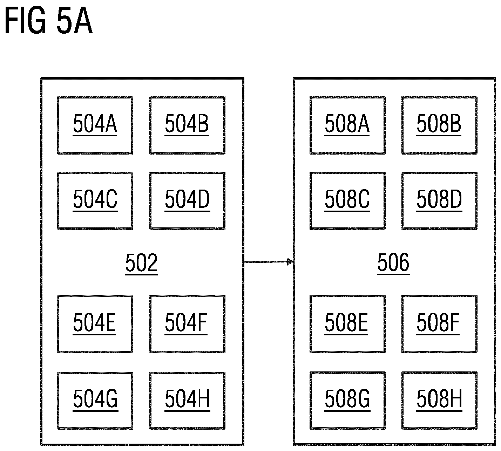

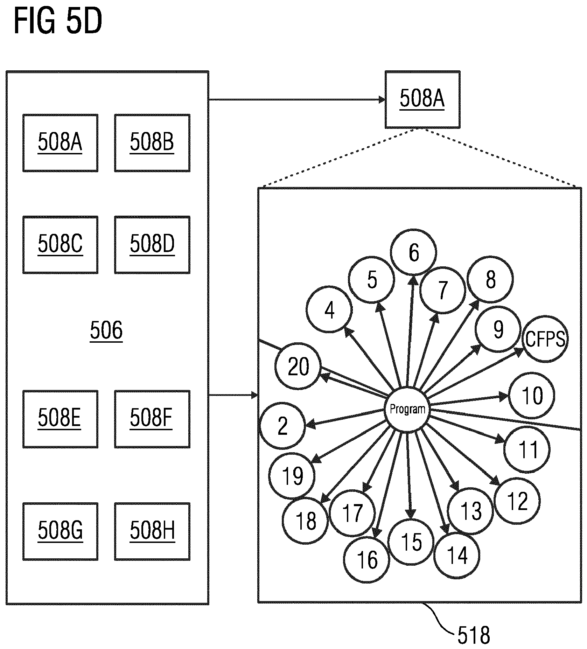

FIG 5A-F is a exemplary illustration of a working of the engineering system 102, according to an embodiment of the present invention. FIGs. 5A-F are described in conjunction with FIGs. 1, 2, 3, and 4a-e.

Referring to FIG. 5A, FIG. 5A illustrates an automation domain object database 502 comprising a plurality of automation domain objects 504a-h. In one example, the automation domain object database 502 is stored in the server 114. The plurality of automation domain objects 504a-h comprises at least one of a program file, an openness file, an automation markup language (AML) file, a memory object, a physical engineering equipment, and piping and instrumentation diagram. Each of the plurality of automation domain objects 504a-h may have a different specification of a plurality of specifications. A specification of an automation domain object comprises information associated with coding languages, coding conventions, hardware configuration, software configurations, processing speed restrictions, memory restrictions, and key process indicators expected from the automation domain object.

The processing unit 202 is configured to analyse the plurality of automation domain objects 504a-h by application of a natural language processing algorithm on a source code of each of the plurality of automation domain objects 504a-h. The processing unit 202 is further configured to determine a plurality of data variables, key process indicators, and a plurality of code statements of each of the plurality of automation domain objects 504a-h. The processing unit 202 is further configured to generate one or more ontology schemas associated with each of the plurality of automation domain objects 504a-h. The one or more ontology schemas are generated based on analysis of the plurality of data variables, key process indicators, and the plurality of code statements of each of the plurality of automation domain objects 504a-h.

The processing unit 202 is further configured to train a plurality of machine learning algorithms 508a-h, of a machine learning algorithm library 506, based on the plurality of automation domain objects 504a-h. Each of the plurality of machine learning algorithms 508a-h is trained such that each of the plurality of machine learning algorithms 508a-h is configured to convert at least one ontology schema of an automation domain object of the plurality of automation domain objects 504a-h into an ontology schema of another automation domain object of the plurality of automation domain objects 504a-h.

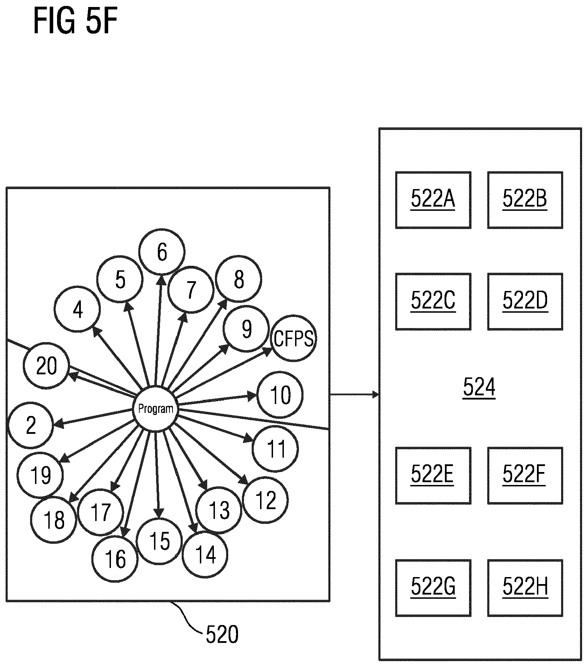

The processing unit 202 is further configured to receive a request to generate a first automation domain object 524 (shown in FIG. 5F) with a first specification. The processing unit 202 is further configured to compare the first specification to the plurality of specifications of the industrial automation project 502. The processing unit 202 is further configured to select another automation domain object (such as a second automation domain object 504c) from the plurality of automation domain objects 504a-h, based on a result of the comparison.

In one example, the first automation domain object 524 is requested to be generated such that the first automation domain object 524 is configured to control a first industrial equipment. In such a case, the processing unit 202 is configured to select, from the plurality of automation domain objects 504a-h, one or more automation domain objects which are configured to control a second industrial equipment which is similar to the first industrial equipment.

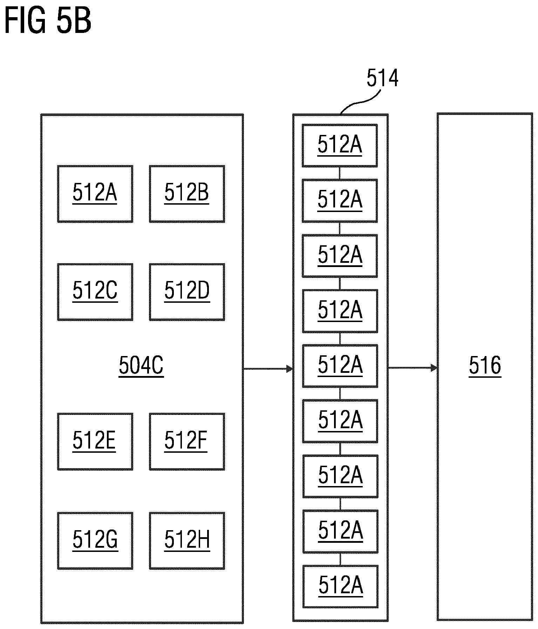

Referring to FIG. 5b, it is shown that the second automation domain object 504c comprises a plurality of items 512a-h. The plurality of items 512a-h comprises a plurality of metadata items and a plurality of data items. The plurality of data items comprises code statements, data variables, variable assignment statements, looped statements comprised in the second automation domain object. The plurality of metadata items comprises date of creation, author name, domain of an industrial environment in which the second automation domain object 504c is deployed. Each of the plurality of data items and the plurality of meta data items of the second automation domain object 504c may have data and control flow interrelationships with other data items and meta data items of other automation domain objects of the plurality of automation domain objects 504a-h.

The processing unit 202 is further configured to serialize the plurality of items 512a-h to generate a serialized representation 514. The serialized representation 514 is further converted into a serialized intermediate representation 516 of the second automation domain object 504a-h.

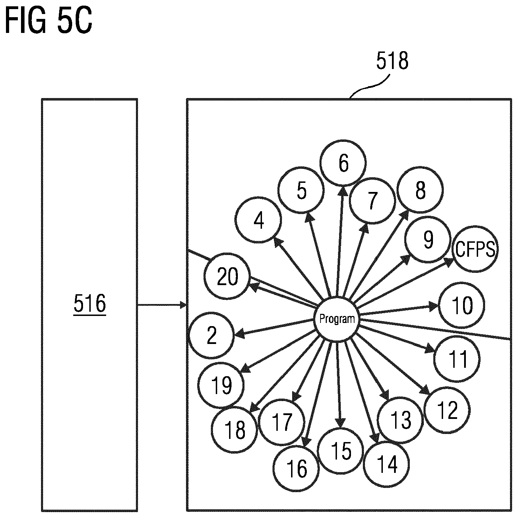

Referring to FIG. 5c, it is shown that the serialized intermediate representation 516 of the second automation domain object 504c is converted into an ontology schema 518 of the second automation domain object 504c. The ontology schema 518 is a digital twin of the second automation domain object 504c. The generation of the ontology schema 518 from the serialized intermediate representation 516, ensures that the generated ontology schema 518 is trained with all of the plurality of items 512a-h of the second automation domain object 504c. Advantageously, the ontology schema 518 is a faithful representation of a plurality of functionalities of the second automation domain object 504c. The processing unit 202 is further configured to determine a machine learning algorithm 508a from the machine learning algorithm library 506. The determined machine learning algorithm is configured to convert the digital twin of the second automation domain object 504c to a digital twin of the first automation domain object 524. The processing unit 202 is further configured to apply the machine learning algorithm 508a on the ontology schema 518 of the second automation domain object 504c.

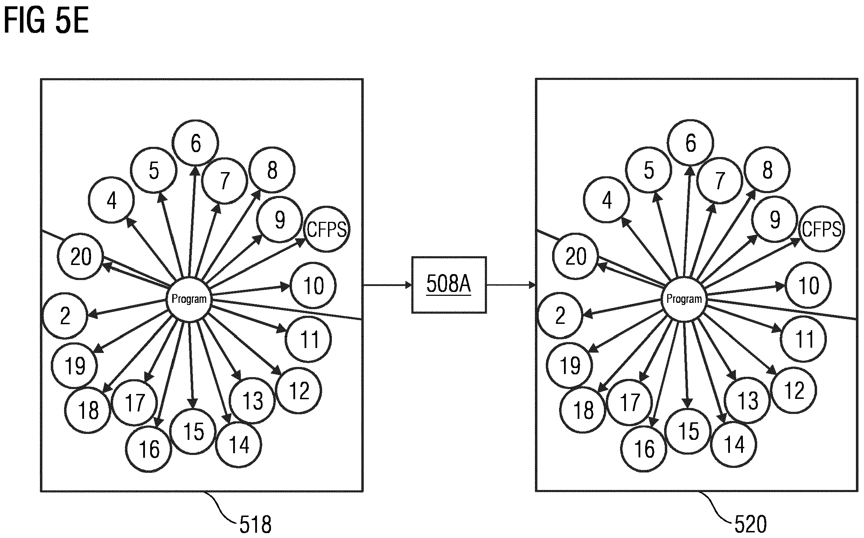

Referring to FIG. 5E, the machine learning algorithm 508a is trained such that the machine learning algorithm 508a is configured to modify the ontology schema 518 to generate a modified ontology schema 520. The modified ontology schema 520 comprises a description of a plurality of items 522a-h of the first automation domain object 524 (as shown in FIG. 5F). The modified ontology schema 520 is the digital twin of the first automation domain object 524.

Referring to FIG. 5F, the processing unit 202 is configured to generate the first automation domain object 524 based on an analysis of the modified ontology schema 520 of the first automation domain object 520. Advantageously, the processing unit is configured to automatically design and code the first automation domain object 524 based on knowledge derived from the second automation domain object 504c.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

### List of reference numerals

- 100: an industrial environment
- 102: an engineering system
- 120A-N: one or more client devices
- 104: a network
- 106: industrial automation project
- 108A-N: one or more automation domain objects
- 120A-N: one or more client devices
- 110: a platform
- 112: an automation module
- 114: a server
- 116: a network interface
- 118: a database
- 202: a processor(s)
- 204: an accessible memory
- 206: a storage unit
- 208: a communication interface
- 210: an input-output unit
- 212: a network interface
- 214: a bus
- 216: an integrated development environment (IDE)
- 302: a request handler module,
- 304: an object consistency checker module,
- 306: an analysis module,
- 308: a modifier module
- 310: an industrial automation project database
- 312: a validation module
- 314: a deployment module.
- 504a and 504b: two or more engineering projects
- 502: automation domain object database
- 504a-h: plurality of automation domain objects
- 506: machine learning algorithm library
- 508a-h: machine learning algorithms
- 512a-h: the plurality of items
- 514: serialized representation
- 516: serialized intermediate representation
- 518: the generated ontology schema
- 520: modified ontology schema
- 524: first automation domain object

## Claims

1. A method of generating an automation domain object with a given specification from another automation domain object, the method comprising:
receiving, by a processing unit (202), a request to generate a first automation domain object (524) which has a first specification;
generating, by the processing unit (202), a serialized intermediate representation (516) of a second automation domain object (504c), wherein
the serialized intermediate representation (516) comprises a plurality of data items and a plurality of metadata items (512a-h) of the second automation domain object (504c), and
the second automation domain object (504c) has a second specification;
generating, by the processing unit (202), an ontology schema (518) comprising information associated with interrelationships and dependencies between the plurality of data items and the plurality of metadata items (512a-h) of the second automation domain object, wherein the ontology schema (518) is generated by an analysis of the serialized intermediate representation (516); and
generating, by the processing unit (202), the first automation domain object (524) which has the first specification, based on an analysis of the ontology schema (518) associated with the second automation domain object (504c) with the second specification.

2. The method according to claim 1, wherein the generation of the first automation domain object (524) comprises:
applying, by the processing unit (202), a machine learning algorithm (508a) on the ontology schema (518) of the second automation domain object (504c);
modifying, by the processing unit (202), the ontology schema (518) based on the application of the machine learning algorithm (508a), such that a modified ontology schema (520) comprises information associated with interrelationships and dependencies between a plurality of data items and a plurality of metadata items (522a-h) associated with the first automation domain object (524);
generating, by the processing unit (202), a serialized intermediate representation of the modified ontology schema (520), wherein the serialized intermediate representation comprises a description of the plurality of data items and the plurality of metadata items (522ah) associated with the first automation domain object (524); and
generating, by the processing unit (202), the first automation domain object (524) which has the first specification, from the serialized intermediate representation of the plurality of data items and the plurality of metadata items (522a-h) of the first automation domain object (524).

3. The method according to claim 2, wherein the machine learning algorithm (508a) is trained such that the machine learning algorithm (508a) is configured to convert the ontology schema (518) of the second automation domain object (504c), into the modified ontology schema (520) of the first automation domain object (524).

4. The method according to claims 1 to 3, wherein the method further comprises:
comparing, by the processing unit (202), the ontology schema (516) associated with the second automation domain object (504c) with the modified ontology schema (520) associated with the first automation domain object (524);
determining, by the processing unit (202), one or more consistencies between the ontology schema (516) and the modified ontology schema (520), based on the comparison;
generating, by the processing unit (202), a corrected ontology schema (520) by modification of the ontology schema (518), such that, the determined one or more inconsistencies are absent in the corrected ontology schema (520); and
modifying, by the processing unit (202), the first automation domain object (524) based on an analysis of the corrected ontology schema.

5. The method according to claims 1 to 4, wherein the first specification and the second specification comprises at least one of key performance indicators, coding conventions, memory requirements, coding languages, and proposed applications associated with the first automation domain object and the second automation domain object respectively.

6. The method according to claims 1 to 5 wherein the serialized intermediate representation is a Javascript Object Notation (JSON) based intermediate representation.

7. The method according to claims 1 to 6, wherein the generation of the serialized intermediate representation comprises:
determining, by the processing unit (202), the plurality of data items and the plurality of meta data items based on an application of a natural language processing algorithm on a source code associated with the second automation domain object (504c);
serializing, by the processing unit (202), each of the determined plurality of data items and the plurality of meta data items associated with the second automation domain object (504c); and
converting, by the processing unit (202), the serialized plurality of data items and metadata items (514) into the serialized intermediate representation.

8. The method according to claims 1 to 7, wherein the first automation domain object (524) and the second automation domain object (504c) is one of a program file, an openness file, an automation markup language (AML) file, a memory object, a physical engineering equipment, and piping and instrumentation diagram.

9. The method according to claims 2 to 8, further comprising:
capturing, by the processing unit (202), a plurality of key process indicators associated with a technical installation, from a control system of the technical installation;
capturing, by the processing unit (202), a plurality of run-time parameters of the first automation domain object;
generating, by the processing unit (202), a knowledge graph comprising information about interdependencies between the plurality of key process indicators and the plurality of run-time parameters, based on an analysis of the captured plurality of key process indicators and the captured plurality of run-time parameters; and
determining, by the processing unit (202), a plurality of inconsistencies in the generated first automation domain object (524) by comparison of the generated knowledge graph and the modified ontology schema (520) associated with the generated first automation domain object (524).

10. The method according to claims 1 to 9, further comprising:
predicting, by the processing unit (202), an occurrence of a variation in the plurality of key process indicators associated with the first automation domain object (524) based on the analysis of the modified ontology schema (520), wherein the variation is predicted to occur as a result of the modification of the ontology schema (520); and
modifying, by the processing unit (202), the first automation domain object (524), based on the prediction of the occurrence of the variation in the plurality of key process indicators, such that the variation is eradicated.

11. The method according to claim 1 to 10, further comprising:
generating, by the processing unit (202), a simulation instance for an industrial environment (100); and
simulating, by the processing unit (202), deployment of the generated first automation domain object in the industrial environment by executing one or more functionalities of the first automation domain object (524) on the generated simulation instance.

12. The method according to claim 11, further comprising:
determining, by the processing unit (202), whether the generated first automation domain object (524) is valid, based on a result of the simulated execution of the generated first automation domain object (524);
deploying, by the processing unit (202), the generated first automation domain object in real-time onto the industrial environment, based on a determination that the generated first automation domain object is compatible; and
displaying, by the processing unit (202), the first automation domain object (524) on a display device (120a-n).

13. An engineering system for generation of an automation domain object with a given specification from another automation domain object, wherein the engineering system comprises:
one or more processing unit (202); and
a memory (204) coupled to the one or more processor(s), wherein the memory comprises an automation module stored in the form of machine-readable instructions executable by the one or more processor(s), wherein the automation module (112) is capable of performing a method according to any of the claims 1-12.

14. An industrial environment (100) comprising:
an engineering system (102) as claimed in claim 13;
a technical installation (106) comprising one or more physical components; and
one or more client devices (120A-N) communicatively coupled to the engineering system (102) via a network (104), wherein the engineering system (102) is configured to perform a method according to any of the claims 1 to 12.

15. A computer-program product, having machine-readable instructions stored therein, that when executed by a processing unit (202), cause the processors to perform a method according to any of the claims 1-12.
